# EUROPÄISCHE PATENTANMELDUNG

(11) **EP 0 769 415 A1**
(43) Veröffentlichungstag der Anmeldung: **23.04.1997**
(21) Anmeldenummer: 95103718.3
(22) Anmeldetag: 15.03.1995
(51) Int. Cl.: B60N 3/02

(54) **Haltevorrichtung**

(71) Anmelder: Ignaz Vogel GmbH & Co KG, Fahrzeugsitze, D-76228 Karlsruhe (DE)
(72) Erfinder: Vogel, Ignaz, D-76228 Karlsruhe (DE)
(74) Vertreter: Trappenberg, Hans

(57) **Zusammenfassung**

Eine Haltevorrichtung für Fahrgäste, insbesondere zur Verwendung in einem Bus, weist einen in einem Abstand etwa parallel zur Decke angeordneten Träger 1 auf. Der Träger 1 ist als Profilschiene ausgebildet, welche wenigstens an der der Decke abgewandten Seite eine T-förmige Nut 2 aufweist.

## Beschreibung

Die Erfindung betrifft eine Haltevorrichtung für Fahrgäste in einem Fahrzeug, insbesondere zur Verwendung in einem Bus, mit einem in einem Abstand etwa parallel zur Decke angeordneten Träger.

Eine derartige Haltevorrichtung ist im Stand der Technik hinreichend bekannt und findet insbesondere bei Fahrzeugen des öffentlichen Personennahverkehrs Verwendung. Sie weist regelmäßig eine Stange auf, welche mittels die Stange umschließende Hülsen, welche mit einem Stützfuß versehen sind, an der Decke des Fahrzeugs befestigt ist. Da sich die Haltevorrichtung durch das gesamte Fahrzeug erstrecken kann, sind mehrere Befestigungen an der Fahrzeugdecke erforderlich.

Zur Erhöhung des Komforts ist die Haltevorrichtung mit Handgriffen vesehen, welche die Stange umschlingen. Hierdurch ergibt sich zum einen der Nachteil, daß die Handgriffe nur im Bereich von zwei Befestigungspunkten der Haltestange bewegt werden können. Dies ist insbesondere dann hinderlich, wenn es aus Gründen von Platzmangnel im Bus für einen Fahrgast wünschenswert wäre, den Handgriff wenige Zentimeter weiter zu bewegen, dies jedoch durch einen Befestigungspunkt verhindert wird.

Um die vorstehenden Nachteile möglichst gering zu halten, müssen die Befestigungspunkte so gewählt werden, daß der Bereich zum Verschieben der Handgriffe möglichst günstig ist. Daher ist die Lage der Befestigungspunkte nicht frei wählbar. Dies ist insbesondere dann von Nachteil, wenn aufgrund der Fahrzeugkonstruktion ein Ort zur Befestigung der Stange gut geeignet wäre, dieser Ort wegen der geforderten Beweglichkeit der Handgriffe nicht gewählt werden kann.

Darüber hinaus gestaltet sich ein Auswechseln der Handgriffe recht schwierig, da zum Aufbringen der Handgriffe auf die Stange die Befestigungspunkte vollständig von der Stange entfernt werden müssen. Will man einen Handgriff im mittleren Bereich der Stange anbringen, so muß die Stange vollständig demontiert werden.

Es ist Aufgabe der Erfindung, eine eingangs genannte Haltevorrichtung derart auszubilden, daß sie auf einfache Art und Weise an der Fahrzeugdecke befestigbar ist und eine einfache Aufnahme von Handgriffen gestattet.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist der Träger als Pofilschiene ausgebildet, welche wenigstens an der der Decke abgewandten Seite eine T-förmige Nut aufweist. In besonders vorteilhafter Weise weist der Träger an der der Decke zugewandten Seite ebenfalls eine T-förmige Nut auf.

An einen erfindungsgemäß ausgebildeten Träger lassen sich auf einfache Weise Handgriffe oder andere Gegenstände, welche in einem Fahrzeug zur Personenbeförderung an unterschiedlichen Stellen befestigt werden müssen, anbringen. Insbesondere ist der erfindungsgemäß ausgebildete Träger zur Aufnahme von Gegenständen geeignet, welche gleitverschieblich in einem Bus angebracht werden müssen. Durch in der Nut angeordnete Gleitstücke, welche regelmäßig eine Gewindebohrung aufweisen, lassen sich beliebige Gegenstände gleitverschieblich an dem Träger befestigen. Die Befestigung kann jedoch auch so ausgebildet sein, daß bei der Verbindung der Gegenstände mit dem Gewindestein der Gewindestein in der T-förmigen Nut eingeklemmt wird. Hierdurch erreicht man eine Arretierung der Verbindung mit der Fahrzeugkarosserie.

Der erfindungsgemäß ausgebildete Träger läßt sich dadurch auf einfache Art und Weise mit der Fahrzeugdecke verbinden, daß man in die der Fahrzeugdecke zugewandte Nut als Gewindesteine ausgebildete Gleitstücke einbringt, mittels welcher der Träger beispielsweise an Halteböcke, welche ihrerseits an der Fahrzeugdecke befestigt sind, angebracht werden kann.

Ein großer Vorteil bei der Befestigung von Gegenständen an dem Träger ist dadurch gegeben, daß die Gegenstände ohne besonderen Aufwand an beliebigen Stellen befestigt werden können. Der entsprechende, sich in der T-förmigen Nut befindliche Gleitstein wird einfach an die entsprechende Stelle geschoben, an der dann der betreffende Gegenstand beispielsweise klemmend mit dem Gewindestein verbunden wird.

Dies ist insbesondere bei der Befestigung von Stützen von Vorteil, welche sich vom oberen Bereich des Fahrzeugs bis zum Fahrzeugboden erstrecken. Derartige Stützen bieten einem Fahrgast nicht nur Halt, sondern sind auch zur Aufnahme beispielsweise eines elektrischen Schalters geeignet, mittels dem der Fahrgast ein Signal auslösen kann.

Um von einem in der Stütze angeordneten Schalter ein elektrisches Signal an beliebige Stellen des Busses weiterleiten zu können, wird eine elektrische Leitung durch das Innere der Stütze, welche regelmäßig ein Rohr ist, geführt. Zur Weiterführung der Leitung kann in vorteilhafter Weise in der T-förmigen Nut eine Ausnehmung vorgesehen sein, welche als Kanal ausgebildet ist. Die elektrische Leitung kann dadurch ohne besonderen Aufwand mittels des erfindungsgemäßen Trägers an beliebige Stellen im Bus geleitet werden.

In besonders vorteilhafter Weise weist die Stütze wenigstens ein Gelenk auf, mittels welchem die mit dem Gelenk verbundenen Teile der Stütze in einem Winkel zueinander verbracht werden können. Eine derart ausgebildete Stütze ist vielfältig verwendbar und kann auf einfache Art und Weise an beliebige Fahrzeugkonstruktionen angepaßt werden.

Während früher derartige Stützen regelmäßig abhängig vom Einbauort individuell hergestellt werden mußten, kann nun eine universal ausgebildete Stütze verwendet werden. Die Anpassung an den Einbauort kann auf einfache Art und Weise durch Verstellen der Gelenke geschehen. Dies hat nicht nur den Vorteil, daß für nahezu alle möglichen Gegebenheiten eine einheitliche Stütze verwendet werden kann, was sich besonders günstig auf die Herstellungskosten und die Lagerhaltung auswirkt, sondern durch die Gelenke ist das einfache Verändern der Geometrie der Stütze und damit eine Anpassung der Stütze an die Gegebenheiten vor Ort sehr schnell und einfach möglich. Sind die Gelenke arretierbar ausgebildet, wie dies eine besondere Ausführungsform der Erfindung vorsieht, kann die Stütze besonders gut für den Einbau vorbereitet werden, und zudem erhöht sich die Festigkeit der Stütze.

Um einen möglichst großen Spielraum zur Anwendung der erfindungsgemäß ausgebildeten Stütze zu erhalten, ist ein Ende der Stütze länger ausgebildet als es für die meisten Anwendungsfälle sein müßte. Die Anpassung an den Einbauort erfolgt dann dadurch, daß nach der Einstellung der Gelenke das betreffende Ende der Stütze auf die benötigte Länge gekürzt wird. Die Befestigung der Stütze mit dem Fahrzeugboden kann auf herkömmliche Art und Weise mittels Bodenlager geschehen.

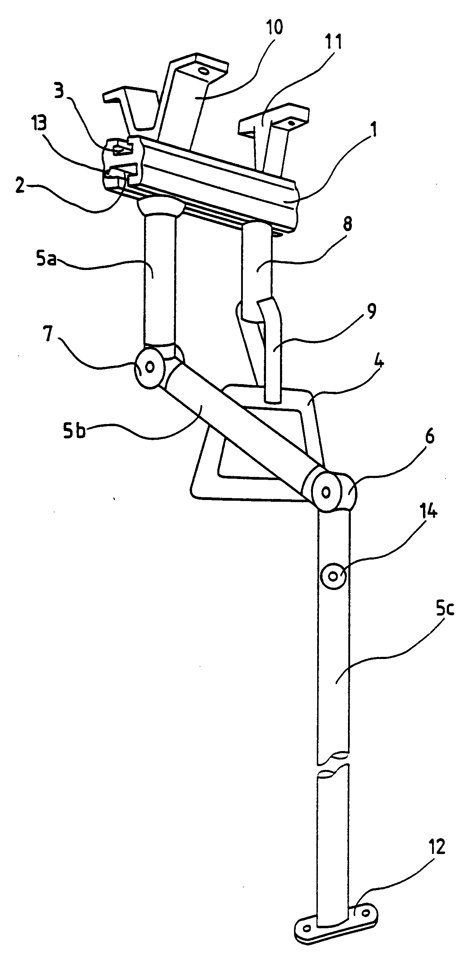

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine erfindungsgemäße Haltevorrichtung mit einem Handgriff und einer Stütze.

Ein Träger 1, welcher nur abschnittsweise gezeigt ist, ist mittels Halteböcken 10, 11 an der Decke eines Fahrzeugs zur Personenbeförderung befestigbar. Der Träger 1 weist an der der Decke abgewandten Seite eine T-förmige Nut 2 und an der der Decke zugewandten Seite eine T-förmige Nut 3 auf. In den T-förmigen Nuten sind Gleitstücke angeordnet, welche eine Gewindebohrung aufweisen, mittels der die Halteböcke 10, 11 mit ihnen verbunden werden können. Die Gleitstücke und die Halteböcke 10, 11 sind so ausgebildet, daß sich bei der Verbindung der Halteböcke 10, 11 mit den Gewindesteinen eine Klemmung ergibt, wodurch die Gleitstücke in der T-förmigen Nut arretiert sind. Die Halteböcke 10, 11 können als Bügel 10 oder Stütze 11 ausgebildet sein.

In der der Decke abgewandten T-förmigen Nut befinden sich ebenfalls Gleitstücke. Mittels dieser Gleitstücke sind ein Handgriff 4 und eine Stütze 5 an dem Träger 1 befestigbar. Der Handgriff 4 ist mittels eines flexiblen Bandes 9 an einer Stange 8 befestigt. Die Stange 8 weist an ihrem dem Handgriff 4 abgewandten Ende einen Gewindestift auf, mittels welchem die Stange 8 in die Gewindebohrung des Gleitstücks eingeschraubt ist. Die Gewindeverbindung kann so ausgebildet sein, daß das Gleitstück nach der Befestigung der Stange 8 in der T-förmigen Nut 2 gleitverschieblich angeordnet ist oder sich in ihr klemmend befindet. Durch die Klemmung ist der Handgriff arretiert und kann nicht mehr innerhalb der T-förmigen Nut 2 verschoben werden.

Der Träger 5 weist Gelenke 6, 7 auf, mittels welcher die mit den Gelenken 6, 7 verbundenen Teile 5a, 5b, 5c der Stütze in einen Winkel verbracht werden können. Das obere Teil 5a der Stütze 5 ist auf ähnliche Weise wie die Stange 8 mit dem Träger 1 verbindbar. Das untere Ende 5c der Stütze 5 ist mittels eines Bodenlagers 12 am Fahrzeugboden befestigbar. Durch die Gelenke 6, 7 kann die Stütze 5 so eingestellt werden, daß sie abhängig vom Einbauort die benötigte Form hat.

Die Stütze 5 weist einen Schalter 14 auf, mittels dem ein Fahrgast ein Signal geben kann. Die Verbindungsleitung des Schalters 14 wird innerhalb der Stütze 5 geführt. Sie gelangt hierdurch in die T-förmige Nut 2 des Trägers 1. Zur Weiterführung der Leitung ist in der T-förmigen Nut 2 eine Ausnehmung 13 ausgebildet, welche zur Aufnahme der Leitung geeignet ist. Durch die Ausnehmung 13 kann die Zuleitung zum Schalter 14 an beliebige Stellen des Fahrzeugs geleitet werden.

## Patentansprüche

1. Haltevorrichtung für Fahrgäste in einem Fahrzeug, insbesondere zur Verwendung in einem Bus, mit einem in einem Abstand etwa parallel zur Decke angeordneten Träger (1),
dadurch gekennzeichnet,
daß der Träger (1) als Profilschiene ausgebildet ist, welche wenigstens an der der Decke abgewandten Seite eine T-förmige Nut (2) aufweist.

2. Haltevorrichtung nach Anspruch 1,
dadurch gekennzeichnet,
daß der Träger (1) an der der Decke zugewandten Seite eine T-förmige Nut (3) aufweist.

3. Haltevorrichtung nach Anspruch 1 oder 2,
dadurch gekennzeichnet,
daß in der Nut (2) eine Ausnehmung (13) vorgesehen ist, welche als Kanal ausgebildet und zur Aufnahme einer Signalleitung geeignet ist.

4. Haltevorrichtung nach einem
der Ansprüche 1 bis 3,
dadurch gekennzeichnet,
daß ein Handgriff (4) vorgesehen ist, welcher mittels eines in der Nut (2) angeordneten Gleitstücks an dem Träger (1) befestigt ist.

5. Haltevorrichtung nach Anspruch 4,
dadurch gekennzeichnet,
daß das Gleitstück in der Nut (2) arretierbar ist.

6. Haltevorrichtung nach einem
der Ansprüche 1 bis 5,
dadurch gekennzeichnet,
daß eine Stütze (5) vorgesehen ist, welche sich von dem Träger (1) zum Boden des Fahrzeugs erstreckt und wenigstens ein Gelenk (6, 7) aufweist, mittels welchem die mit dem Gelenk (6, 7) verbundenen Teile (5a, 5b, 5c) der Stütze (5) in einen Winkel zueinander verbracht werden können.

7. Haltevorrichtung nach Anspruch 6,
dadurch gekennzeichnet,
daS das Gelenk (6, 7) arretierbar ausgebildet ist.

8. Haltevorrichtung nach Anspruch 6 oder 7,
dadurch gekennzeichnet,
daß die Stütze (5) mittels eines in der Nut (2) angeordneten Gleitstücks an dem Träger (1) befestigt ist.

9. Haltevorrichtung nach einem
der Ansprüche 6 bis 8,
dadurch gekennzeichnet,
daß das Gleitstück in der Nut (2) arretierbar ist.
